# EUROPÄISCHE PATENTSCHRIFT

(11) **EP 3 762 283 B1**
(45) Veröffentlichungstag und Bekanntmachung des Hinweises auf die Patenterteilung: **10.11.2021**
(21) Anmeldenummer: 19701307.1
(22) Anmeldetag: 14.01.2019
(51) Int. Cl.: B62J 43/00, B62K 19/40

(54) **NEIGEFAHRZEUG**
LEANING VEHICLE
VÉHICULE À INCLINAISON

(30) Priorität: 09.03.2018 DE 102018203603
(43) Veröffentlichungstag der Anmeldung: 13.01.2021
(73) Patentinhaber: Bayerische Motoren Werke Aktiengesellschaft, 80809 München (DE)
(72) Erfinder: GLONNER, Hans, 85276 Pfaffenhofen (DE); FISCHER, Michael, 80637 München (DE); KONRAD, Jan, 80636 München (DE); REINHARDT, Daniel, 80807 München (DE)
(86) Internationale Anmeldenummer: PCT/EP2019/050768
(87) Internationale Veröffentlichungsnummer: WO 2019/170306

(56) Entgegenhaltungen:
- EP-A2- 2 210 803
- JP-A- 2000 118 469
- US-A- 6 047 786
- US-A1- 2011 036 657
- US-A1- 2016 039 489

## Beschreibung

Die Erfindung betrifft ein Neigefahrzeug, wie Motorrad oder motorradähnliches Kraftfahrzeug, mit mindestens einer Rahmenträgerstruktur zur befestigenden Aufnahme zumindest eines Antriebsmittels, einer Steuerkopfeinheit, eines Federbeins und/oder einer Schwingeneinheit eines Hinterrads, die mindestens eine Rahmeneinheit umfasst, und mit mindestens einer Energiespeichereinheit, die mindestens ein elektrisches Speichermittel und mindestens ein Speichergehäuse umfasst, in dem das Speichermittel anordenbar oder angeordnet ist, wobei die Rahmeneinheit der Rahmenträgerstruktur und das Speichergehäuse der Energiespeichereinheit zumindest abschnittsweise ein gemeinsames Bauteil umfassen, wobei das als Rahmeneinheit ausgebildete Speichergehäuse mindestens eine durchgehende hohlzylindrische, Ausnehmung umfasst, in der die Steuerkopfeinheit drehbar festlegbar oder festgelegt ist und wobei das als Rahmeneinheit ausgebildete Speichergehäuse mindestens einen lastaufnehmenden schalenartigen oberen Ringkörper und mindestens einen lastaufnehmenden schalenartigen unteren Ringkörper umfasst, die lösbar oder unlösbar aneinander festlegbar sind und die gemeinsam einen zentralen Hohlraum zumindest nahezu in Gänze nach außen begrenzen, in welchem zumindest ein erstes elektrisches Speichermittel anordenbar oder angeordnet ist

Neigefahrzeuge sind aus dem Stand der Technik bekannt. Sie können beispielsweise Motorräder oder motorradähnliche Kraftfahrzeuge umfassen. Darüber hinaus können Neigefahrzeuge auch Fahrräder umfassen, die beispielsweise Unterstützung durch einen Elektromotor aufweisen. Bei aktuellen elektrisch betriebenen Neigefahrzeugen, insbesondere Elektro-Motorrädern, besteht das Neigefahrzeug im Wesentlichen aus einem konventionellen Fahrzeugrahmen, an dem ein Speichergehäuse festgelegt ist. An dem konventionellen Fahrzeugrahmen sind beispielsweise die Steuerkopfeinheit, das Antriebsmittel, das Federbein und/oder eine Schwingeneinheit festgelegt.

Hierdurch sind bei den Neigefahrzeugen, insbesondere Elektro-Motorrädern, eine Vielzahl von Komponenten vorgesehen, die zu einem hohen Gewicht führen. Ferner bestehen aufgrund der notwendigen Verbindungstechnik zwischen den einzelnen Komponenten Festigkeits- und Steifigkeitsnachteile sowie ein erhöhter Montageaufwand bedingt durch das Verbinden bzw. der Vielzahl von Montageschritten.

Ein gattungsgemäßes Neigefahrzeug ist bekannt aus US 6 047 786 A. Ein Neigefahrzeug, bei dem ein zweiteiliges Gehäuse an einerlastaufnehmenden Rahmeneinheit festlegbar ist, ist bekannt aus US 2011/036657 A1.

Aufgabe eines Ausführungsbeispiels der Erfindung ist, ein Neigefahrzeug vorzuschlagen, das kompakt und gewichtsreduziert ausbildbar ist.

Diese Aufgabe wird bei einem eingangs genannten Neigefahrzeug dadurch gelöst, dass die durchgehende hohlzylindrische Ausnehmung, in der die Steuerkopfeinheit drehbar festlegbar oder festgelegt ist im lastaufnehmenden schalenartigen oberen Ringkörper und im lastaufnehmenden schalenartigen unteren Ringkörper anordenbar oder angeordnet ist.

Hierdurch erstreckt sich das Lenkrohr der Steuerkopfeinheit sowohl durch den lastaufnehmenden schalenartigen oberen Ringkörper als auch durch den lastaufnehmenden schalenartigen unteren Ringkörper des als Rahmeneinheit ausgebildeten Speichergehäuses.

Dadurch, dass die Rahmeneinheit der Rahmenträgerstruktur und/oder das Speichergehäuse der Energiespeichereinheit zumindest abschnittsweise ein gemeinsames Bauteil umfassen, ist das Neigefahrzeug bauteilreduziert ausgebildet. Hierdurch ist nicht nur der Montageaufwand verringert, sondern auch Kosten und Gewicht des Neigefahrzeugs reduziert.

Rahmeneinheit und Speichergehäuse können grundsätzlich nur abschnittsweise ein gemeinsames Bauteil umfassen. Es erweist sich jedoch als vorteilhaft, wenn Rahmeneinheit und Speichergehäuse in Gänze ein gemeinsames Bauteil umfassen.

Unter einem Neigefahrzeug werden Fahrräder, Motorräder oder motorradähnliche Kraftfahrzeuge, wie Motorroller, insbesondere zwei-, drei- oder vierrädrige Motorroller, Scooter, neigbare Trikes, Quads oder dergleichen verstanden.

Grundsätzlich ist es denkbar, dass das als Rahmeneinheit ausgebildete Speichergehäuse ein Element mehrerer Rahmeneinheiten ist. Solchenfalls kann das als Rahmeneinheit ausgebildete Speichergehäuse zentral zwischen anderen Rahmeneinheiten ausgebildet sein oder zwischen anderen Rahmeneinheiten und dem Antriebsmittel, der Steuerkopfeinheit, dem Federbein und/oder der Schwingeneinheit angeordnet sein. Darüber hinaus ist es denkbar, dass die Rahmenträgerstruktur ausschließlich aus dem als Rahmeneinheit ausgebildeten Speichergehäuse besteht, an dem solchenfalls Antriebsmittel, Steuerkopfeinheit, Federbein und/oder Schwingeneinheit angeordnet sind.

Dadurch, dass das als Rahmeneinheit ausgebildete Speichergehäuse mindestens eine durchgehende, insbesondere hohlzylindrische, Ausnehmung umfasst, in der die Steuerkopfeinheit bewegbar, insbesondere drehbar, festlegbar oder festgelegt ist, sind die Aufnahme und die Anbindung der Steuerkopfeinheit an die Rahmeneinheit verbessert.

Beispielsweise ist es denkbar, dass in der durchgehenden Ausnehmung ein Lenkrohr der Steuerkopfeinheit anordenbar ist. Um dieses auf einfache Weise drehbar bezüglich des als Rahmeneinheit ausgebildeten Speichergehäuses zu lagern, kann an einem oberen Ende der Ausnehmung und an einem unteren Ende der Ausnehmung jeweils ein Lagermittel vorgesehen sein, beispielsweise ein Kugellager. Mittels einer oberen Gabelbrücke und einer unteren Gabelbrücke können darüber hinaus die weiteren Komponenten der Steuerkopfeinheit mit dem Lenkrohr verbunden sein.

In dem mehrteiligen Speichergehäuse, ist die Ausnehmung mehrere Gehäuseteile durchgreifend angeordnet.

Darüber hinaus erweist es sich als vorteilhaft, wenn das als Rahmeneinheit ausgebildete Speichergehäuse, insbesondere auf der der Ausnehmung gegenüberliegenden Seite, eine Aufnahme für das Federbein und/oder die Schwingeneinheit des Neigefahrzeugs umfasst.

Die Aufnahme kann solchenfalls beispielsweise zwei parallel zueinander gestreckte Vorsprünge umfassen, die jeweils eine Öffnung umfassen, durch die das Federbein und/oder die Schwingeneinheit mittels eines bolzenartigen Stifts auf einfache Weise an dem als Rahmeneinheit ausgebildeten Speichergehäuse festlegbar ist. Die Bolzen können solchenfalls in der festgelegten Anordnung im Wesentlichen quer zur Fahrtrichtung erstreckt sein.

Das als Rahmeneinheit ausgebildete Speichergehäuse umfasst mindestens einen lastaufnehmenden schalenartigen oberen Ringkörper und mindestens einen lastaufnehmenden schalenartigen unteren Ringkörper, die lösbar oder unlösbar aneinander festlegbar sind und die gemeinsam einen zentralen Hohlraum zumindest nahezu in Gänze nach außen begrenzen, in welchem zumindest ein erstes elektrisches Speichermittel anordenbar oder angeordnet ist.

Wenn der lastaufnehmende schalenartige obere Ringkörper und der lastaufnehmende schalenartige untere Ringkörper unlösbar miteinander verbunden sind, können oberer Ringkörper und unterer Ringkörper nicht mehr zerstörungsfrei voneinander gelöst werden. Solchenfalls sind oberer Ringkörper und unterer Ringkörper miteinander verschweißt, verlötet, verklebt und/oder vernietet.

Wenn der lastaufnehmende schalenartige obere Ringkörper und der lastaufnehmende schalenartige untere Ringkörper lösbar miteinander verbunden sind, ist das im zentralen Hohlraum angeordnete erste Speichermittel zugänglich und austauschbar. Oberer Ringkörper und unterer Ringkörper können solchenfalls verschraubt und/oder verclipst sein.

Ferner ist bei einer Ausführungsform des Neigefahrzeus vorgesehen, dass zwischen dem lastaufnehmenden schalenartigen oberen Ringkörper und dem lastaufnehmenden schalenartigen unteren Ringkörper, ein Dichtmittel angeordnet ist, das sich insbesondere vollumfänglich entlang der Fügestelle des oberen Ringkörpers mit dem unteren Ringkörper erstreckt.

Die durchgehende hohlzylindrische, Ausnehmung, in der die Steuerkopfeinheit drehbar, festlegbar oder festgelegt ist, ist im lastaufnehmenden schalenartigen oberen Ringkörper und im lastaufnehmenden schalenartigen unteren Ringkörper anordenbar oder angeordnet ist.

Ferner erweist es sich als zweckmäßig, wenn die Aufnahme für das Federbein und/oder die Schwingeneinheit des Hinterrads des Neigefahrzeugs im oder am lastaufnehmenden schalenartigen oberen Ringkörper anordenbar oder angeordnet ist.

Ferner ist bei einer Ausführungsform des Neigefahrzeugs vorgesehen, dass das als Rahmeneinheit ausgebildete Speichergehäuse am lastaufnehmenden schalenartigen oberen Ringkörper auf der dem lastaufnehmenden schalenartigen unteren Ringkörper abgewandten Seite einen schalenförmigen Deckel umfasst, der zusammen mit dem lastaufnehmenden schalenartigen oberen Ringkörper einen oberen Hohlraum begrenzt, in dem ein zweites, insbesondere elektrisches, Speichermittel der Energiespeichereinheit anordenbar oder angeordnet ist.

Hierdurch ist der zum Speichern von, insbesondere elektrischer, Energie vorhandener Speicherplatz erhöht. Grundsätzlich ist es denkbar, dass auch der schalenförmige Deckel des als Rahmeneinheit ausgebildeten Speichergehäuses, lastaufnehmend ist. Wenn der Deckel allerdings ausschließlich als Verkleidung des zweiten, insbesondere elektrischen, Speichermittels dient, kann dieser als nicht-Last-tragendes Teil entsprechend gewichtsreduziert ausgebildet werden.

Um die Speicherkapazität der Energiespeichereinheit weiter zu erhöhen, ist bei einer Ausführungsform des Neigefahrzeugs vorgesehen, dass das als Rahmeneinheit ausgebildete Speichergehäuse am lastaufnehmenden schalenartigen unteren Ringkörper auf der dem lastaufnehmenden schalenartigen oberen Ringkörper abgewandten Seite eine schalenförmige Wanne umfasst, die zusammen mit dem lastaufnehmenden schalenartigen unteren Ringkörper einen unteren Hohlraum begrenzt, in dem ein drittes, insbesondere elektrisches, Speichermittel der Energiespeichereinheit anordenbar oder angeordnet ist.

Analog zu dem Deckel des als Rahmeneinheit ausgebildeten Speichergehäuses kann auch die Wanne gewichtsreduziert ausgebildet werden, wenn sie ausschließlich zur Verkleidung des dritten, insbesondere elektrischen, Speichermittels dient und keine Lasten aufnehmen muss.

Deckel und Wann können derart ausgebildet sein, dass sie Lasten aufnehmen und führen können.

Die Wanne kann als tragendes Bauteil ausgebildet sein, wenn die Aufnahme für das Antriebsmittel des Neigefahrzeugs am lastaufnehmenden schalenartigen unteren Ringkörper und/oder an der Wanne anordenbar oder angeordnet ist.

Das Antriebsmittel kann schwingenfest an einer Triebsatzschwinge angeordnet werden. Solchenfalls kann die Triebsatzschwinge mittelbar oder unmittelbar an dem Speichergehäuse gelagert angeordnet sein.

Deckel und Wanne können lösbar oder unlösbar mit dem lastaufnehmenden schalenartigen oberen Ringkörper, bzw. mit dem lastaufnehmenden schalenartigen unteren Ringkörper, verbunden sein. Wenn Deckel und Wanne lösbar mit den Ringkörpern verbunden sind, können diese beispielsweise angeschraubt werden. Darüber hinaus erweist es sich als zweckmäßig, wenn zwischen der Wanne und dem lastaufnehmenden schalenartigen unteren Ringkörper sowie zwischen dem Deckel und dem lastaufnehmenden schalenartigen oberen Ringkörper jeweils ein Dichtelement vorgesehen ist, das sich vorzugsweise vollumfänglich um die Fügestelle der jeweils zwei Komponenten erstreckt. Hierdurch ist ein Eindringen von Schmutz und Feuchtigkeit zu den jeweiligen Speichermitteln reduziert.

Schließlich erweist es sich als vorteilhaft, wenn das als Rahmeneinheit ausgebildete Speichergehäuse mindestens ein insbesondere rippenartiges Verstärkungsmittel umfasst und/oder wenn das Verstärkungsmittel und/oder das als Rahmeneinheit ausgebildete Speichergehäuse in Gänze oder zumindest bereichsweise einen, insbesondere kohlenstofffaserverstärkten, Kunststoff, insbesondere eines Kohlenstofffaserverbundkunstoff-Titan und/oder Kohlenstofffaserverbundkunstoff-Aluminium Hybridstruktur, und/oder ein Polyaramid, insbesondere Kevlar, umfasst.

Durch das Vorsehen von rippenartigen Verstärkungsmitteln, kann die Steifigkeit des als Rahmeneinheit ausgebildeten Speichergehäuses erhöht werden und gleichzeitig das Gesamtgewicht geringgehalten werden.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Neigefahrzeugs.

In der Zeichnung zeigt:
- Figur 1: Eine schematische Seitenansicht auf ein Ausführungsbeispiel des Neigefahrzeugs;
- Figur 2: Eine explosionsartige Darstellung eines als Rahmeneinheit ausgebildeten Speichergehäuses des Neigefahrzeugs;
- Figur 3: Eine geschnittene seitliche Detailansicht der Ausnehmung gemäß Figur 2 mit in der Ausnehmung angeordneter Komponenten einer Steuerkopfeinheit.

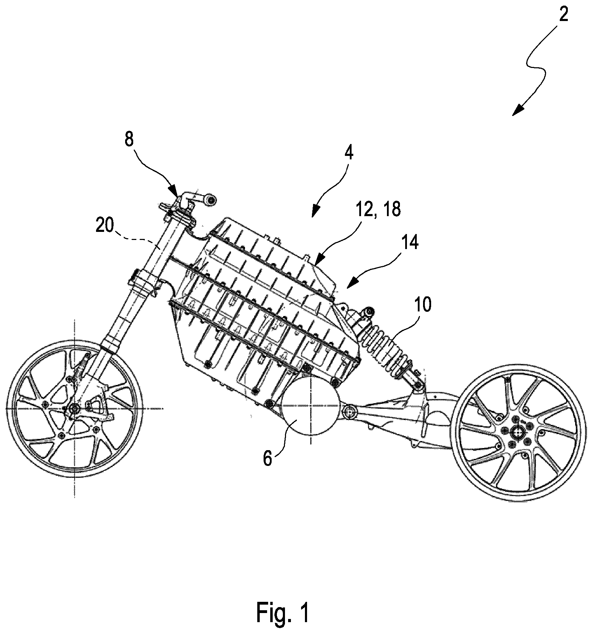

Figur 1 zeigt ein insgesamt mit dem Bezugszeichen 2 versehenes Neigefahrzeug. Bei dem in den Figuren gezeigten Ausführungsbeispiel umfasst dieses ein Motorrad. Das Neigefahrzeug 2 umfasst eine Rahmenträgerstruktur 4, an dem ein Antriebsmittel 6, eine Steuerkopfeinheit 8, ein Federbein 10 und/oder eine Schwingeneinheit eines Hinterrads des Neigefahrzeugs 2 befestigbar sind. Die Rahmenträgerstruktur 4 umfasst eine Rahmeneinheit 12.

Darüber hinaus umfasst das Neigefahrzeug 2 eine Energiespeichereinheit 14, die mindestens ein elektrisches Speichermittel 16 und mindestens ein Speichergehäuse 18 umfasst, in dem das Speichermittel 16 angeordnet ist. Die Figuren 1 bis 4 zeigen ein Ausführungsbeispiel des Neigefahrzeugs 2, bei dem die Rahmeneinheit 12 der Rahmenträgerstruktur 4 und das Speichergehäuse 18 der Energiespeichereinheit 14 ein gemeinsames Bauteil umfassen.

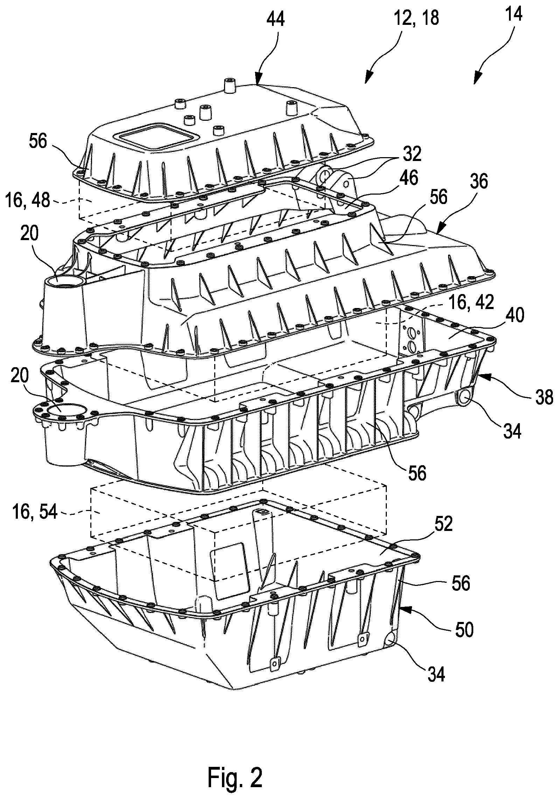

Mit Blick in die Figuren 1 und 2 werden nachfolgend die einzelnen Komponenten des als Rahmeneinheit 12 ausgebildeten Speichergehäuses 18 näher beschrieben.

Das als Rahmeneinheit 12 ausgebildete Speichergehäuse 18 umfasst eine durchgehende Ausnehmung 20 auf seiner dem der Steuerkopfeinheit 8 zugewandten Seite. In dieser ist die Steuerkopfeinheit 8 drehbar, bewegbar, festlegbar.

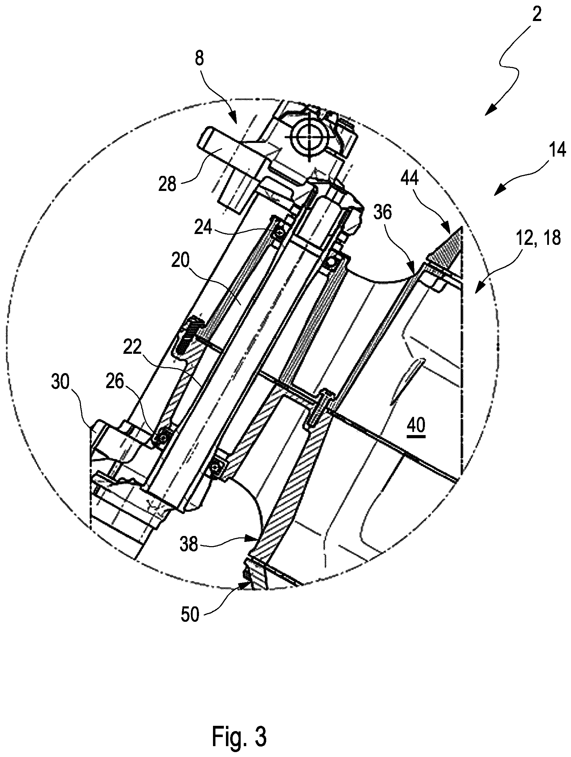

Figur 3 zeigt eine geschnittene Detailansicht eines Bereichs der Steuerkopfeinheit 8, die in der Ausnehmung 20 des Speichergehäuses 18 angeordnet ist. Hierbei ist ein Lenkrohr 22 durch die Ausnehmung 20 des Speichergehäuses 18 durchgesteckt. Das Lenkrohr 22 ist durch ein oberes Lager 24 und ein unteres Lager 26 drehbar gehalten. Mittels einer oberen Gabelbrücke 28 und einer unteren Gabelbrücke 30 ist der Rest der Steuerkopfeinheit 8 mit dem Lenkrohr 22 verbunden.

Darüber hinaus ist aus Figur 2 ersichtlich, dass das als Rahmeneinheit 12 ausgebildete Speichergehäuse 18 eine auf der der Ausnehmung 20 gegenüberliegenden Seite eine Aufnahme 32 für das Federbein 10 und/oder für die Schwingeneinheit umfasst. Darüber hinaus umfasst das als Rahmeneinheit 12 ausgebildete Speichergehäuse 18 eine Aufnahme 34 für das Antriebsmittel 6 des Neigefahrzeugs 2.

Die Figuren 1 bis 3 zeigen ein Ausführungsbeispiel des Neigefahrzeugs 2, bei der das Speichergehäuse 18 aus einem lastaufnehmenden schalenartigen oberen Ringkörper 36 und einen lastaufnehmenden schalenartigen unteren Ringkörper 38 aufweist. Diese sind bei dem in den Figuren gezeigten Ausführungsbeispiel lösbar, insbesondere mittels Verschrauben, miteinander gefügt. Zwischen dem lastaufnehmenden schalenartigen oberen Ringkörper 36 und dem lastaufnehmenden schalenartigen unteren Ringkörper 38, ist ein zentraler Hohlraum 40 gebildet, in dem ein erstes Speichermittel 42 der Energiespeichereinheit 14 angeordnet ist.

An dem lastaufnehmenden schalenartigen oberen Ringkörper 36 ist ein Abschnitt der Ausnehmung 20 sowie die Aufnahme 32 für das Federbein 10 angeordnet.

An dem lastaufnehmenden schalenartigen unteren Ringkörper 38, ist ein zweiter Abschnitt der Ausnehmung 20 sowie die Aufnahme 24 für das Antriebsmittel 6 des Neigefahrzeugs 2 angeordnet.

Darüber hinaus umfasst das Speichergehäuse 18 einen schalenförmigen Deckel 44, der zusammen mit dem lastaufnehmenden schalenartigen oberen Ringkörper 36 einen oberen Hohlraum 46 begrenzt, in dem ein zweites Speichermittel 48 der Energiespeichereinheit 14 anordenbar oder angeordnet ist.

Darüber hinaus umfasst das Speichergehäuse 18 eine schalenförmige Wanne 50, die zusammen mit dem schalenartigen unteren Ringkörper 38 einen unteren Hohlraum 52 begrenzt, in dem ein drittes Speichermittel 54 der Energiespeichereinheit 14 angeordnet ist. Auch die Wanne 50 umfasst eine Aufnahme 34 für das Antriebsmittel 6 des Neigefahrzeugs 2.

Um die Steifigkeit des als Rahmeneinheit 12 ausgebildeten Speichergehäuses 18 zu erhöhen, umfasst das Speichergehäuse 18 rippenartige Verstärkungsmittel 56.

### Bezugszeichenliste

- 2: Neigefahrzeug
- 4: Rahmenträgerstruktur
- 6: Antriebsmittel
- 8: Steuerkopfeinheit
- 10: Federbein
- 12: Rahmeneinheit
- 14: Energiespeichereinheit
- 16: Speichermittel
- 18: Speichergehäuse
- 20: Ausnehmung
- 22: Lenkrohr
- 24: oberes Lager
- 26: unteres Lager
- 28: obere Gabelbrücke
- 30: untere Gabelbrücke
- 32: Aufnahme für Federbein
- 34: Aufnahme für Antriebsmittel
- 36: oberer Ringkörper
- 38: unterer Ringkörper
- 40: zentraler Hohlraum
- 42: erstes Speichermittel
- 44: Deckel
- 46: oberer Hohlraum
- 48: zweites Speichermittel
- 50: Wanne
- 52: unterer Hohlraum
- 54: drittes Speichermittel
- 56: Verstärkungsmittel

## Patentansprüche

1. Neigefahrzeug (2), wie Motorrad oder motorradähnliches Kraftfahrzeug, mit mindestens einer Rahmenträgerstruktur (4) zur befestigenden Aufnahme zumindest eines Antriebsmittels (6), einer Steuerkopfeinheit (8), eines Federbeins (10) und/oder einer Schwingeneinheit eines Hinterrads, die mindestens eine Rahmeneinheit (12) umfasst, und mit mindestens einer Energiespeichereinheit (14), die mindestens ein elektrisches Speichermittel (16) und mindestens ein Speichergehäuse (18) umfasst, in dem das Speichermittel (16) anordenbar oder angeordnet ist, wobei die Rahmeneinheit (12) der Rahmenträgerstruktur (4) und das Speichergehäuse (18) der Energiespeichereinheit (14) zumindest abschnittsweise ein gemeinsames Bauteil umfassen, wobei das als Rahmeneinheit (12) ausgebildete Speichergehäuse (18) mindestens eine durchgehende hohlzylindrische, Ausnehmung (20) umfasst, in der die Steuerkopfeinheit (8) drehbar festlegbar oder festgelegt ist und wobei das als Rahmeneinheit (12) ausgebildete Speichergehäuse (18) mindestens einen lastaufnehmenden schalenartigen oberen Ringkörper (36) und mindestens einen lastaufnehmenden schalenartigen unteren Ringkörper (38) umfasst, die lösbar oder unlösbar aneinander festlegbar sind und die gemeinsam einen zentralen Hohlraum (40) zumindest nahezu in Gänze nach außen begrenzen, in welchem zumindest ein erstes elektrisches Speichermittel (42) anordenbar oder angeordnet ist, **dadurch gekennzeichnet, dass** die durchgehende hohlzylindrische Ausnehmung (20), in der die Steuerkopfeinheit (8) drehbar festlegbar oder festgelegt ist im lastaufnehmenden schalenartigen oberen Ringkörper (36) und im lastaufnehmenden schalenartigen unteren Ringkörper (38) anordenbar oder angeordnet ist.

2. Neigefahrzeug (2) nach Anspruch 1, **dadurch gekennzeichnet, dass** das als Rahmeneinheit (12) ausgebildete Speichergehäuse (18), insbesondere auf der der Ausnehmung (20) gegenüberliegenden Seite, eine Aufnahme für das Federbein (32) und/oder die Schwingeneinheit des Neigefahrzeugs (2) umfasst.

3. Neigefahrzeug (2) nach Anspruch 1 oder 2, **dadurch gekennzeichnet, dass** das als Rahmeneinheit (12) ausgebildete Speichergehäuse (18) eine Aufnahme für das Antriebsmittel (34) des Neigefahrzeugs (2) umfasst.

4. Neigefahrzeug (2) nach mindestens einem der vorhergehenden Ansprüche, **dadurch gekennzeichnet, dass** die Aufnahme für das Federbein (32) und/oder die Schwingeneinheit des Hinterrads des Neigefahrzeugs (2) im oder am lastaufnehmenden schalenartigen oberen Ringkörper (36) anordenbar oder angeordnet ist.

5. Neigefahrzeug (2) nach mindestens einem der vorhergehenden Ansprüche, **dadurch gekennzeichnet, dass** das als Rahmeneinheit (12) ausgebildete Speichergehäuse (18) am lastaufnehmenden schalenartigen oberen Ringkörper (36) auf der dem lastaufnehmenden schalenartigen unteren Ringkörper (38) abgewandten Seite einen schalenförmigen Deckel (44) umfasst, der zusammen mit dem lastaufnehmenden schalenartigen oberen Ringkörper (36) einen oberen Hohlraum (46) begrenzt, in dem ein zweites, insbesondere elektrisches, Speichermittel (48) der Energiespeichereinheit (14) anordenbar oder angeordnet ist.

6. Neigefahrzeug (2) nach mindestens einem der vorhergehenden Ansprüche, **dadurch gekennzeichnet, dass** das als Rahmeneinheit (12) ausgebildete Speichergehäuse (18) am lastaufnehmenden schalenartigen unteren Ringkörper (38) auf der dem lastaufnehmenden schalenartigen oberen Ringkörper (36) abgewandten Seite eine schalenförmige Wanne (50) umfasst, die zusammen mit dem lastaufnehmenden schalenartigen unteren Ringkörper (38) einen unteren Hohlraum (52) begrenzt, in dem ein drittes, insbesondere elektrisches, Speichermittel (54) der Energiespeichereinheit (14) anordenbar oder angeordnet ist.

7. Neigefahrzeug (2) nach mindestens einem der vorhergehenden Ansprüche, **dadurch gekennzeichnet, dass** die Aufnahme für das Antriebsmittel (34) des Neigefahrzeugs (2) am lastaufnehmenden schalenartigen unteren Ringkörper (38) und/oder an der Wanne (50) anordenbar oder angeordnet ist.

8. Neigefahrzeug (2) nach mindestens einem der vorhergehenden Ansprüche, **dadurch gekennzeichnet, dass** das als Rahmeneinheit (12) ausgebildete Speichergehäuse (18) mindestens ein insbesondere rippenartiges Verstärkungsmittel (56) umfasst und/oder dass das Verstärkungsmittel (56) und/oder das als Rahmeneinheit (12) ausgebildete Speichergehäuse (18) in Gänze oder zumindest bereichsweise einen, insbesondere kohlenstofffaserverstärkten, Kunststoff, insbesondere eines Kohlenstofffaserverbundkunstoff-Titan und/oder Kohlenstofffaserverbundkunstoff-Aluminium Hybridstruktur, und/oder ein Polyaramid, insbesondere Kevlar, umfasst.

## Claims

1. Tilting vehicle (2), such as motorcycle or motorcycle-like motor vehicle, with at least one frame carrier structure (4) for receiving, in a fastening manner, at least one drive means (6), a steering head unit (8), a suspension strut (10) and/or a swing arm unit of a rear wheel, which frame carrier structure (4) comprises at least one frame unit (12), and with at least one energy store unit (14) which comprises at least one electrical store means (16) and at least one store housing (18), in which the store means (16) can be arranged or is arranged, the frame unit (12) of the frame carrier structure (4) and the store housing (18) of the energy store unit (14) comprising a common component at least in sections, the store housing (18) which is configured as a frame unit (12) comprising at least one continuous hollow-cylindrical recess (20), in which the steering head unit (8) can be fixed or is fixed rotatably, and the store housing (18) which is configured as a frame unit (12) comprising at least one load-supporting shell-like upper ring body (36) and at least one load-supporting shell-like lower ring body (38) which can be fixed to one another in a releasable or non-releasable manner and which together delimit a central cavity (40) at least virtually completely to the outside, in which cavity (40) at least one first electrical store means (42) can be arranged or is arranged, **characterized in that** the continuous hollow-cylindrical recess (20), in which the steering head unit (8) can be fixed or is fixed rotatably, can be arranged or is arranged in the load-supporting shell-like upper ring body (36) and in the load-supporting shell-like lower ring body (38).

2. Tilting vehicle (2) according to Claim 1, **characterized in that** the store housing (18) which is configured as a frame unit (12) comprises, in particular on the side which lies opposite the recess (20), a mount for the suspension strut (32) and/or the swing arm unit of the tilting vehicle (2).

3. Tilting vehicle (2) according to Claim 1 or 2, **characterized in that** the store housing (18) which is configured as a frame unit (12) comprises a mount for the drive means (34) of the tilting vehicle (2).

4. Tilting vehicle (2) according to at least one of the preceding claims, **characterized in that** the mount for the suspension strut (32) and/or the swing arm unit of the rear wheel of the tilting vehicle (2) can be arranged or is arranged in or on the load-supporting shell-like upper ring body (36).

5. Tilting vehicle (2) according to at least one of the preceding claims, **characterized in that** the store housing (18) which is configured as a frame unit (12) has a shell-shaped cover (44) on the load-supporting shell-like upper ring body (36) on the side which faces away from the load-supporting shell-like lower ring body (38), which shell-shaped cover (44), together with the load-supporting shell-like upper ring body (36), delimits an upper cavity (46), in which a second, in particular electrical, store means (48) of the energy store unit (14) can be arranged or is arranged.

6. Tilting vehicle (2) according to at least one of the preceding claims, **characterized in that** the store housing (18) which is configured as a frame unit (12) comprises a shell-shaped tub (50) on the load-supporting shell-like lower ring body (38) on the side which faces away from the load-supporting shell-like upper ring body (36), which shell-shaped tub (50), together with the load-supporting shell-like lower ring body (38), delimits a lower cavity (52), in which a third, in particular electrical, store means (54) of the energy store unit (14) can be arranged or is arranged.

7. Tilting vehicle (2) according to at least one of the preceding claims, **characterized in that** the mount for the drive means (34) of the tilting vehicle (2) can be arranged or is arranged on the load-supporting shell-like lower ring body (38) and/or on the tub (50).

8. Tilting vehicle (2) according to at least one of the preceding claims, **characterized in that** the store housing (18) which is configured as a frame unit (12) comprises at least one reinforcing means (56) which is, in particular, rib-shaped, and/or **in that** the reinforcing means (56) and/or the store housing (18) which is configured as a frame unit (12) comprises, entirely or at least in regions, a plastic which is, in particular, carbon fibre-reinforced, in particular of a carbon fibre composite plastic/titanium and/or carbon fibre composite plastic/aluminium hybrid structure, and/or a polyaramid, in particular Kevlar.

## Revendications

1. Véhicule à inclinaison (2), tel qu'une motocyclette ou un véhicule automobile similaire à une motocyclette, comportant au moins une structure de support de cadre (4) servant au logement, de manière fixe, d'au moins un moyen d'entraînement (6), d'une unité de tête de direction (8), d'une jambe de suspension (10) et/ou d'une unité de vibrations d'une roue arrière, laquelle structure de support de cadre comporte au moins une unité de cadre (12), et comportant au moins une unité d'accumulation d'énergie (14) qui comporte au moins un moyen accumulateur électrique (16) et au moins un boîtier d'accumulateur (18) dans lequel le moyen accumulateur (16) peut être disposé ou est disposé, l'unité de cadre (12) de la structure de support de cadre (4) et le boîtier d'accumulateur (18) de l'unité d'accumulation d'énergie (14) comportant au moins dans certaines parties un composant commun, le boîtier d'accumulateur (18) réalisé sous forme d'unité de cadre (12) comportant au moins un évidement (20) cylindrique creux traversant dans lequel l'unité de tête de direction (8) peut être fixée ou est fixée de manière rotative et le boîtier d'accumulateur (18) réalisé sous forme d'unité de cadre (12) comportant au moins un corps annulaire supérieur (36) de type coque recevant des charges et un corps annulaire inférieur (38) de type coque recevant des charges, lesquels corps annulaires peuvent être fixés l'un à l'autre de manière amovible ou non amovible et lesquels délimitent ensemble une cavité centrale (40) vers l'extérieur au moins approximativement dans sa totalité, cavité dans laquelle au moins un premier moyen accumulateur électrique (42) peut être disposé ou est disposé, **caractérisé en ce que** l'évidement (20) cylindrique creux traversant, dans lequel l'unité de tête de direction (8) peut être fixée ou est fixée de manière rotative, peut être disposé ou est disposé dans le corps annulaire supérieur (36) de type coque recevant des charges et dans le corps annulaire inférieur (38) de type coque recevant des charges.

2. Véhicule à inclinaison (2) selon la revendication 1, **caractérisé en ce que** le boîtier d'accumulateur (18) réalisé sous forme d'unité de cadre (12) comporte, en particulier sur le côté opposé à l'évidement (20), un logement pour la jambe de suspension (32) et/ou l'unité de vibrations du véhicule à inclinaison (2).

3. Véhicule à inclinaison (2) selon la revendication 1 ou 2, **caractérisé en ce que** le boîtier d'accumulateur (18) réalisé sous forme d'unité de cadre (12) comporte un logement pour le moyen d'entraînement (34) du véhicule à inclinaison (2).

4. Véhicule à inclinaison (2) selon au moins l'une des revendications précédentes, **caractérisé en ce que** le logement pour la jambe de force (32) et/ou l'unité de vibrations de la roue arrière du véhicule à inclinaison (2) peut être disposé ou est disposé dans ou sur le corps annulaire supérieur (36) de type coque recevant des charges.

5. Véhicule à inclinaison (2) selon au moins l'une des revendications précédentes, **caractérisé en ce que** le boîtier d'accumulateur (18) réalisé sous forme d'unité de cadre (12) comporte, au niveau du corps annulaire supérieur (36) de type coque recevant des charges, sur le côté opposé au corps annulaire inférieur (38) de type coque recevant des charges, un couvercle (44) en forme de coque qui délimite, conjointement avec le corps annulaire supérieur (36) de type coque recevant des charges, une cavité supérieure (46) dans laquelle un deuxième moyen accumulateur (48), en particulier électrique, de l'unité d'accumulation d'énergie (14) peut être disposé ou est disposé.

6. Véhicule à inclinaison (2) selon au moins l'une des revendications précédentes, **caractérisé en ce que** le boîtier d'accumulateur (18) réalisé sous forme d'unité de cadre (12) comporte, au niveau du corps annulaire inférieur (38) de type coque recevant des charges, sur le côté opposé au corps annulaire supérieur (36) de type coque recevant des charges, un bac (50) en forme de coque qui délimite, conjointement avec le corps annulaire inférieur (38) de type coque recevant des charges, une cavité inférieure (52) dans laquelle un troisième moyen accumulateur (54), en particulier électrique, de l'unité d'accumulation d'énergie (14) peut être disposé ou est disposé.

7. Véhicule à inclinaison (2) selon au moins l'une des revendications précédentes, **caractérisé en ce que** le logement pour le moyen d'entraînement (34) du véhicule à inclinaison (2) peut être disposé ou est disposé au niveau du corps annulaire inférieur (38) de type coque recevant des charges et/ou au niveau du bac (50).

8. Véhicule à inclinaison (2) selon au moins l'une des revendications précédentes, **caractérisé en ce que** le boîtier d'accumulateur (18) réalisé sous forme d'unité de cadre (12) comporte au moins un moyen de renforcement (56) en particulier de type nervure et/ou **en ce que** le moyen de renforcement (56) et/ou le boîtier d'accumulateur (18) réalisé sous forme d'unité de cadre (12) comporte (nt), dans sa/leur totalité ou au moins dans certaines zones, une matière synthétique en particulier renforcée par des fibres de carbone, en particulier une structure hybride matière synthétique composite renforcée par des fibres de carbone/titane et/ou matière synthétique renforcée par des fibres de carbone/aluminium et/ou un polyaramide, en particulier du Kevlar.
